# EUROPEAN PATENT APPLICATION

(11) **EP 2 602 985 A1**
(43) Date of publication of application: **12.06.2013**
(21) Application number: 11191916.3
(22) Date of filing: 05.12.2011
(51) Int. Cl.: H04M 3/51, H04W 4/22, G06Q 10/10, G08B 25/14, G08B 21/04, G09B 29/00, G08B 27/00

(54) **Emergency response system**

(71) Applicant: The European Union, represented by the European Commission, 1049 Brussels (BE)
(72) Inventor: Andritsos, Fivos, I-21026 Gavirate (IT)
(74) Representative: Office Freylinger

(57) **Abstract**

An emergency response system (10) is interfaced with mobile telephony networks (16). The ERS is switchable into a participatory surveillance mode, in which the ERS is configured to take the following actions:
a) Collecting data relating to mobile phones in the surroundings of the emergency situation, the data including current positions and sensorial faculties of the mobile phones.
b) Displaying the data in a map showing the surroundings of the emergency situation.
c) Enabling an operator (14) to select at least one of the mobile phones.
d) Upon selection of at least one of the mobile phones, calling the selected at least one mobile phone (18) by establishing a priority communication channel with the selected at least one mobile phone and displaying audio and/or visual data acquired by the selected at least one mobile phone using its sensorial faculties.

## Description

### Technical field

The present invention generally relates to an emergency response system, in particular, one that enables establishing a special communication channel for obtaining information about a major emergency situation.

### Background Art

Prompt acquisition and forwarding of pertinent information to the right people in case of emergencies, in particular following low-probability, high-consequence events, is still an open issue. This has been demonstrated in all recent emergencies following big natural or man-made events (Katrina hurricane, London & Madrid bombing events and the Japan 2011 tsunami). This is due to the complexity and unpredictability of crisis and the inadequacy of pre-established, centralized, top-down emergency management systems to manage such crisis, in particular during the critical early phases.

In what regards audiovisual information, large scale CCTV based surveillance systems cannot guarantee prompt information and are regarded as highly intrusive to the citizens' privacy. On the other hand, intelligent/smart surveillance tools are very scarcely deployed and, in any case, cannot be expected to cope with the diversity of the real life events that can trigger emergency situations.

JP 2004056730 discloses a cellular phone and a disaster information network utilizing the cellular phone. Thanks to the network, every general citizen is capable of accurately transmitting and receiving information (such as audio information, visual information and data) in the event of a disaster. The exchange of information remains possible even in a disaster situation in which it is difficult or impossible to use a public telephone network. The cellular phone comprises a built-in camera, a LAN control part and a wireless LAN interface. In the event of a disaster, a wireless LAN with a radio base station is constructed by using the LAN control part and the wireless LAN interface. Audio information such as a rescue request message, image information on the situations of peripheral areas and the other data are transmitted from the cellular phone, and distribution of information such as a map of evacuation locations is distributed from a radio base station.

US 2002/143469 discloses a system for gathering real time field assessment data to emergency management centers (EMCs) through distributed communications networks. Information and space-time coordinates are transmitted to the EMC for processing over a communication network. Upon receipt, the field information is integrated into a geographic database such that the information generates a template showing the current state or condition of the identified geographical location on an automated basis. The template and the associated geographical portion of the geographical database are distributed to users via the Internet, intranet or other communication means.

US 7,817,982 discloses a system for determining the status and/or extent of damage caused by a disaster. A disaster status system (DSS) is used to create a backup communication network, in the event that the primary communication network has been damaged, to locate and/or contact users that may be in or around a disaster-affected area.

JP 2010238002A relates to a system for collecting and integrating a large amount of disaster information when a large disaster occurs. In the system, field information such as image information and position information are transmitted to an information server by use of software using a camera function and GPS function of a portable terminal, the field information and the safety information are accumulated in the information server, and total damage is calculated. The information can be visually displayed on a map on a client PC connected to the information server in a wired or wireless manner, using the position information.

JP 10040484A describes making it possible to grasp the conditions of a disaster by collecting disaster information from personal handy phone system (PHS) terminal equipment when a large-scale disaster occurs. When a disaster occurs, a base station in the area when the disaster has occurred is designated from an information collecting/processing terminal, the PHS terminal equipment existent in that area is called, and the disaster information is collected.

US 2003/162557A discloses a system that receives information of a disaster occurring in region A and information of subscribers in the region A, and stores it in a disaster region subscriber table storage unit. Then, it transmits the disaster notice to the subscriber terminal in the region A. When it receives information of the position of the subscriber terminal or a voluntary safety confirmation response from the subscriber terminal in the disaster occurring region A, it judges whether the subscriber is in the safe state, and stores the judgment result in the disaster region subscriber table storage unit. With this configuration, the occurrence of the disaster can be notified to the subscribers in the region A, and it becomes possible for each subscriber to judge whether he or she is in the safe state.

US 2008/139165 discloses a solution for providing a situational status and a location of a subscriber potentially affected by a disaster to concerned parties (e.g. relatives of persons potentially affected by the disaster). When a disaster is detected, mobile devices of subscribers can be queried for location and wireless connectivity by a centrally located disaster response system. In one embodiment, a special communication channel can be reserved for the disaster response system to obtain the situational status indicators and messages, which can consume relatively little bandwidth compared to voice communications. Further, when communications are intermittent, the disaster response system can automatically and repetitively query mobile devices for desired status information. All of this information can be recorded and reported to concerned parties. In one contemplated scenario, the disaster response system can determine areas and/or subscribers in greatest need of relief based upon subscriber status indicators and subscriber locations. For example, if eighty percent of subscribers in a first region report a situational status indicator that the subscribers are in dire need of aid and if ninety percent of subscribers in a second region report that they are alright, then relief workers can be directed towards the first region. In one embodiment, media capabilities of mobile phones can be utilized for disaster assessment purposes. For instance, one or more subscribers can use a camera, a video capture feature, an audio capture feature, and the like of their mobile device to convey disaster details to the disaster response system.

### Technical problem

It is an object of the present invention to provide an emergency response system, which facilitates collection of information about an emergency, especially in the early phases thereof, e.g. when no emergency response teams are yet on the site of the emergency. This object is achieved by an emergency response system as claimed in claim 1.

### General Description of the Invention

The present invention exploits the fact that humans are by far the most sensitive and intelligent sensor platform able to detect abnormal situations and events triggering emergency situations quite early. The exponential development of digital wireless communications and, in particular, the cellular telephony, has provided the average citizen with previously unimaginable communication and data acquisition capabilities. Most modern cellular or smart phones have location services, accelerometer, compass as well as the technical capacity of acquiring and transmitting high quality video and sound.

Recent emergencies (natural hazards, industrial accidents, conflicts, etc.) have shown that pertinent audiovisual information has been recorded mostly by individuals through the use of smart phones, especially during the early, most crucial phases. However, even if such information was recorded early enough, it has had little effect to the emergency management because of the lack of a system for collecting such information and dispatching it an organized manner to the emergency response or decision taking centers.

The idea underlying the invention is to use the smart-phone equipped citizens as nodes of an ad-hoc sensor network that will provide, in an organized way, near real-time information to those who manage the emergencies. The proposed system will enable the smart-phone equipped citizen to use his smart phone not only to give an alarm (as is now the case) but also to provide, in a coordinated way, audio and video streams to the emergency centers for the management of emergency situations.

According to the invention, the emergency response system (hereinafter: ERS) is interfaced with one or more mobile telephony networks. The ERS, in response to an emergency call reporting of a major emergency situation (e.g. a fire, a pile-up, or a disaster such as an earthquake, a terrorist attack, or the like), switches (automatically) or may be switched (manually) to a participatory surveillance mode. When receiving an emergency call, the telephone operator at the emergency response center tries to get the necessary information (such as: the site of the emergency, the kind of emergency, an indication whether persons are in danger and, if yes, how many, etc.) in order to be able to deploy adequate response measures. The operator enters the information into the ERS as he gets it from the caller. Based on the information he receives, the operator may switch the ERS into the participatory surveillance mode. The ERS may also be configured to switch to the participatory surveillance mode automatically, when the information entered satisfies certain conditions.

When switched into the participatory surveillance mode, the ERS is configured to take the following actions:
a) Collecting data relating to mobile phones in the surroundings of the emergency situation, the data including current positions and sensorial faculties (camera, accelerometer, compass, satellite navigation, e.g. GPS, etc.) of the mobile phones. It will be understood that location information concerning the emergency situation is one of the first issues the operator of the emergency response center tries to clarify with the caller. The operator usually enters the location information into the ERS as he gets it. Accordingly, the location information is typically available at the moment when the ERS is switched to participatory surveillance mode. Collecting of data relating to mobile phones in the surroundings of the emergency situation is preferably achieved by the ERS connecting to the location services of the one or more mobile telephony networks and requesting them to return information on the positions and the sensorial capabilities (camera, accelerometer, compass, GPS, etc.) of the mobile phones in the vicinity of the emergency situation. The communication between the ERS and the location services of each mobile telephony network follows a predefined protocol.
b) Displaying the data in a map showing the surroundings of the emergency situation. Preferably, this is done by representing each mobile phone as a symbol indicating its sensorial faculties, each symbol being arranged in the map in accordance with the current position of the corresponding mobile phone.
c) Enabling an operator of the emergency response center to select at least one of the mobile phones, e.g. by clicking on the corresponding symbol in the displayed map.
d) Upon selection of at least one of the mobile phones, calling the selected at least one mobile phone by establishing a priority communication channel with the selected at least one mobile phone and displaying audio and/or visual data acquired by the selected at least one mobile phone using its sensorial faculties. As used herein, "visual data" designates both individual picture and video data.

Preferably, collecting of data relating to mobile phones in the surroundings of the emergency situation is repeated (e.g. periodically) while the emergency situation persists. Accordingly, the data provided by the mobile telephony network is typically not just a static list of phones inside a range around the incident but includes one or more updates. Preferably, the data collection is achieved via a service link between the ERS and the mobile telephony network operators that is active while the ERS is in the participatory surveillance mode. For larger incidents, when the participatory surveillance mode is active for many hours, there is preferably a continuous update of the mobile phone list within the region of interest.

It should be noted that acquisition and streaming of audio and/or visual data at step d) presupposes that the called end user consents to serving the emergency response center or the authority calling him as a reporter. The operator of the emergency response center may then give remote guidance to the mobile phone user in order to obtain the best possible audio and/or visual data from the emergency site without putting the mobile phone user's health and life at stake. Preferably, the ERS enables the streaming of audio and/or visual data only if the called end user confirms his agreement by a confirmative action on his smart phone.

As those skilled will appreciate, the proposed solution can be implemented with current technology. This may advantageously be achieved by implementation of particular procedures and standards at the mobile telephony network operators, special procedural links to the emergency response centers and some applets embedded in the smart phone OS.

According to a preferred embodiment, a special application (applet) is pre-installed on each smart phone, which, upon receiving the ERS's request (from the ERS server), performs the following operations:
i. Identifies in a clear and unambiguous way the requesting ERS, so that the smart-phone user knows that the call / connection comes from the Emergency Response Authorities (police, fire-brigades, civil protection ...).
ii. Provides a short but concise message on the responsibility and the use of any possible information forwarded to the ERS server.
iii. Asks and records the consent or denial of the user to forward visual, audio or other information relating to the specific emergency.
iv. Opens a bi-directional voice and/or messaging channel between the smartphone user and the ERS operator for voice communication and possible instructions and/or requests.
v. Gives the possibility, by just pressing a button, to record and automatically forward to the server (ERS), in parallel to the voice channel, visual, audio or other type of information.
vi. Opens a secure file on the smartphone where all related client processes are logged, serving for possible matters of legal responsibilities etc.
vii. Terminates the whole emergency process on local (client) or remote (server) initiative.

The proposed solution takes full advantage of the sensorial and communication capabilities of modern smart phones and the mobile telecommunication networking technologies for all low-level operations, like image / video / sound acquisition and forwarding.

For high-level activities/choices, such as the choice of what information to capture and what channel/stream to prioritize, the usefulness of the invention relies on human reasoning and intelligence.

It will be appreciated that the proposed ERS is extremely flexible and adaptable to a great range of needs and events. It gives the opportunity to request and acquire audio and/or visual information in absolute transparency only upon a valid reason since its activation requires action from the emergency management and the user side.

According to a preferred embodiment of the invention, the collecting of data relating to the mobile phones in the surroundings of the emergency situation comprises:
a1) Sending a request to the one or more mobile telephony networks for localizing all mobile phones in the surroundings of the emergency situation, and
a2) Receiving one or more lists from the one or more mobile telephony networks that comprise the numbers, type (serial number) and most recent geolocations of the mobile phones in the vicinity of the emergency situation.

The collecting of data relating to the mobile phones in the surroundings of the emergency situation may comprise the further step:
a3) looking up the sensorial faculties of the mobile phone in a register indicating the sensorial faculties for each type of mobile phone (e.g. based upon the serial number).

Preferably, the priority communication channel is encrypted.

The priority communication channel is preferably attributed a bandwidth commensurate with an expected data rate of the audio and/or visual data.

Preferably, the audio and/or visual data received from the called mobile phone are recorded, i.e. stored in memory, for later use.

### Brief Description of the Drawings

A preferred embodiment of the invention will now be described, by way of example, with reference to the accompanying drawing in which:

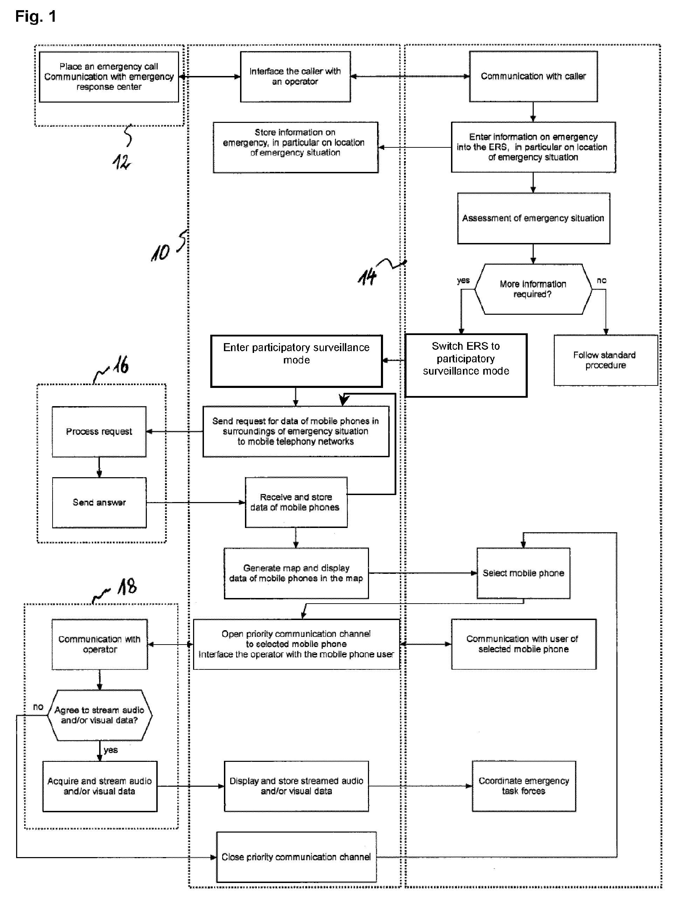

Fig. 1 is a schematic flowchart of the interactions between an ERS configured in accordance with a preferred embodiment of the invention.

### Description of Preferred Embodiments

A main task of an ERS is to allow the operators of an emergency response center to communicate with the callers seeking assistance or reporting an emergency, the emergency task forces (police, fire brigade), authorities and any person who could be of assistance if the situation so requires. The ERS also gives the operators access to all kind of information that may be useful in the event of an emergency (databases, maps, emergency response plans, etc.)

Fig. 1 illustrates a possible way of responding to an emergency reported by a caller, such as a witness or a person affected by the emergency situation. In Fig. 1, the dotted lines indicate the different persons and devices carrying out the corresponding actions.

When an emergency call reaches the emergency response center, the ERS 10 interfaces the caller 12 with an operator 14 at the emergency response center. The operator 14 then communicates with the caller 12 according to the normal procedure, in order to obtain the necessary information for being able to organize an appropriate response to the emergency situation. The operator 14 preferably enters the information he obtains from the caller into the ERS immediately, preferably by filling in a standard electronic form. While he speaks or immediately after the emergency call has ended, the operator assesses the emergency situation that has been reported to him and informs the competent authorities (police, civil defence, fire brigade, hospital, etc.) Depending on the severity of the situation, e.g. in the event of a disaster (e.g. a pile-up, a plane crash, an earthquake, a terrorist attack, a riot, etc.), he may then decide that more information on the emergency is required in order to gain a better understanding of the situation and to coordinate the emergency task forces.

In this case, the operator may switch the ERS into participatory surveillance mode. This can be done while the operator is still on the phone with the caller or thereafter. As an alternative to switching the ERS manually into participatory surveillance mode, the ERS could be configured to enter that mode automatically if the information on the emergency entered by the operator satisfies one or more predefined conditions.

Once the ERS has (been) switched into emergency management mode, it checks whether the operator has entered a location information concerning the reported emergency. If the operator has not yet entered that information, the ERS prompts the operator to do so. When the location of the emergency is available, the ERS sends a request to the mobile telephony networks 16 for being sent data relating to the mobile phones in the surroundings of the emergency situation (e.g. by specifying a certain radius around the location of the emergency). Each mobile telephony network operator processes the request and replies by sending a list of the mobile phones including their current (estimated) position as well as their sensorial faculties. The ERS then generates a map of the surroundings of the emergency situation, wherein each mobile phone is represented at its current position by one or more symbols or labels indicating its sensorial faculties. As illustrated in Fig. 1, the ERS repeatedly requests data from the mobile telephony network operators in order to refresh the map displayed to the emergency response center operator 14. As an alternative to the ERS having to each time request the data relating to the mobile phones, the ERS could open a service link with the mobile telephony network operators over which they keep sending data updates until the ERS closes the service link (i.e. when the participatory surveillance mode is terminated).

The operator may now select the mobile phone, which he considers most appropriate for providing him with audio and/or visual data on the emergency situation. The operator's choice may depend on the distances of the mobile phones from the site of the emergency, on the sensorial faculties (e.g. on the type of camera built in, etc.) and on other parameters. The operator may effect his selection by clicking (or double-clicking) on the symbol representing the desired mobile phone in the map. When the selection has been entered, the ERS opens a - preferably encrypted - priority communication channel with the selected mobile phone.

When the called end user 18 takes the phone call, the operator 14 may ask him whether he accepts to record audio and/or visual data using his mobile phone and transmit the data to the emergency response center. If the end user 18 accepts, the operator 14 of the emergency response center may give remote guidance to him in order to obtain the best possible audio and/or visual data from the emergency site without putting the mobile phone user's health and life at stake. Preferably, the ERS enables the streaming of audio and/or visual data only if the called end user confirms his agreement by a confirmative action on his smart phone.

The ERS records the streamed data in a memory and displays them to the operator, who, thanks to the additional information, will be in a better position for taking the adequate decisions and coordinating the emergency task forces.

If the called end user should refuse to assist the emergency response center, the operator of the emergency response center may shut down the priority communication channel. He may then try with another one of the displayed mobile phones.

Instead of the operator of the emergency response center having to call the end users in the surroundings one by one, the ERS could be configured to send a message to a group of mobile phones selected by the operator, in which the end users are asked whether they would agree to serve the emergency response center as reporters. The ERS would then highlight those mobile phones, whose holders have given their consent by reply, allowing the operator to chose one of the highlighted mobile phones for streaming of audio and/or video data.

As indicated hereinabove, instead of transmitting the sensorial faculties of each mobile phone, the mobile telephony networks could simply transmit the type of mobile phone. The ERS could then look up the faculties of the mobile phones in a database.

While a specific embodiment has been described in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. Emergency response system (10) interfaced with one or more mobile telephony networks (16), said emergency response system being switchable into a participatory surveillance mode in response to an emergency call reporting of a major emergency situation, said emergency response system being configured to take the following actions upon having switched into said participatory surveillance mode:
collecting data relating to mobile phones in the surroundings of said emergency situation, said data including current positions and sensorial faculties of said mobile phones;
displaying said data in a map showing the surroundings of said emergency situation;
enabling an operator (14) to select at least one of said mobile phones;
upon selection of at least one of said mobile phones, establishing a priority communication channel with said selected at least one mobile phone (18); and
displaying audio and/or visual and/or other data acquired by said selected at least one mobile phone using its sensorial faculties.

2. Emergency response system as claimed in claim 1, wherein said collecting of data comprises:
sending a request to said one or more mobile telephony networks for localizing all mobile phones in the surroundings of said emergency situation, and
receiving one or more lists from said one or more mobile telephony networks that comprise the numbers, type and most recent geolocations of the mobile phones in the vicinity of the emergency situation..

3. Emergency response system as claimed in claim 2, wherein said collecting of data further comprises:
looking up the sensorial faculties of said mobile phone in a register indicating the sensorial faculties for each type of mobile phone.

4. Emergency response system as claimed in any one of claims 1 to 3, wherein the displaying of said data comprises representing each mobile phone by a symbol indicating its sensorial faculties, each symbol being arranged in said map in accordance with the current position of the corresponding mobile phone.

5. Emergency response system as claimed in claim 4, wherein each symbol represents a virtual button, which can be clicked on by said operator for selecting the corresponding mobile phone.

6. Emergency response system as claimed in any one of claims 1 to 5, wherein said priority communication channel is encrypted.

7. Emergency response system as claimed in any one of claims 1 to 6, wherein said priority communication channel is attributed a bandwidth commensurate with an expected data rate of said audio and/or visual data.

8. Emergency response system as claimed in any one of claims 1 to 7, wherein said audio and/or visual data are recorded.

9. Applet for pre-installation on a mobile phone, said applet being configured to interact with an emergency response system as claimed in any one of claims 1 to 8, said applet causing said mobile phone, upon being contacted by said emergency response system via said priority communication channel, to perform perform any of the following operations or any combination thereof:
i. authenticating the emergency response system, so that the mobile phone user knows that the call / connection originates from the emergency response system,
ii. providing a message on the responsibility and the use of audio and/or visual and/or other data forwarded to the emergency response system,
iii. asking and recording the consent or denial of the user to forward audio and/or visual and/or other data relating to the emergency,
iv. enabling, by opening or keeping open, a bi-directional voice and/or messaging channel to the emergency response system,
v. controlling recording and forwarding to the emergency response system audio and/or visual and/or other data,
vi. opening a secure log file on the mobile phone, in which events and user actions in relation with operations i. to vii. are stored.
vii. terminating communication with said emergency response system upon initiative of the user of the mobile phone or of said emergency response system.
